(19) Europäisches Patentamt
European Patent Office
Office européen des brevets

(11) **EP 3 085 619 A1**

(12) **EUROPEAN PATENT APPLICATION**
published in accordance with Art. 153(4) EPC

(43) Date of publication:
26.10.2016 Bulletin 2016/43

(51) Int Cl.:
*B64C 39/06* (2006.01)    *B64C 3/32* (2006.01)
*B64C 29/00* (2006.01)    *B64D 27/02* (2006.01)

(21) Application number: 13870382.2

(22) Date of filing: 16.12.2013

(86) International application number:
PCT/RU2013/001127

(87) International publication number:
WO 2015/094003 (25.06.2015 Gazette 2015/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• Chepik, Aleksandr Anufrievich
  Moscow, 117218 (RU)

• Chepik, Anton Aleksandrovich
  Moscow, 117218 (RU)

(72) Inventor: KOSHKAREV, Dmitry Georgievich
  deceased (RU)

(74) Representative: Schulz Junghans
  Patentanwälte PartGmbB
  Großbeerenstraße 71
  10963 Berlin (DE)

(54) **COMBINATION AIRCRAFT WING**

(57)    The invention relates to air transport and can be used in aircraft of various designs. The aircraft wing comprises the lifting surface and turbojet engine. The lifting surface is the combination of conventional aerodynamic wing and carrying plate rigidly connected to it. The engine is rigidly attached to the carrying plate so that the stream of hot gas from it flows around its upper surface. The carrying plate profile is the same as the profile of the Laval nozzle of the turbojet engine. The proposed design of the wing is destined to increase the range, carrying capacity and safety of use of aircrafts for various purposes.

gravity center

aircraft

symmetry axis of the aircraft

Plane comprising center of gravity of aircraft and the lifting force vectors.

**Fig.3**

**Description**

The invention relates to air transport and can be used in aircrafts of various designs.

Any aircraft heavier than air requires a wing to create the lift force. Currently there is accumulated wealth of experience in the designing and application of different wing designs, including wings, the design of which provides the lift force control when flowing around the upper surface of semi-cylindrical channel of the wing with the air stream from the propeller engine, which should be noted in view of the claimed solution principle. Such design of the wing, known since 1929, is called Caster duct (named after W.R. Custer, the author of the idea. 1929) in English literature. The design implementation of the idea was repeatedly verified in experiments on various aircrafts. However, due to several reasons this design was not applied practically. Such reasons, in particular include the need for use of propeller engine, which is not able to create the air stream of high specific pressure, which leads to an increase in the channel wing size, and consequently to deterioration of the aerodynamic properties of the whole aircraft with increasing flight speed.

The Russian Federation patent No. 2223891 describes the method of the lift force formation, consisting in the fact that the heated gas streams from the gas ejection device, directed above the upper surface of two aerodynamic lifting areas, create a binary cyclone in the form of a pair of contacting, rotating gas columns filled with the said streams, which wash the upper surface of two areas on the object. The airplane comprises the controlled gas ejection device designed to produce heated gas streams and the wing, upper surface of which has a pair of symmetrically arranged aerodynamic lifting areas. The gas ejection device is installed with the possibility to create a binary cyclone by means of the heated gas streams. The controlled aerodynamic elements are installed to form the forces and moments of the airplane stabilization. The jump start for the creation of the known solution, according to its authors, was the problem of safety and environment compatibility of airliners, which can be prospectively solved by the implementation of the method of vertical takeoff and vertical landing. This method will provide controlled significant slowdown in operations: hovering before landing; nullification of the Earth contact velocity; possibility of soft landing anywhere in the world and possibility of forced landing without fuel draining. Human factor and weather condition independence, and as a result - significant increase in safety, can be achieved through the full automation of takeoff and landing, which is unreal for existing airliners at high speed of their movement in conditions of narrow air and ground corridors of modem airports. However, the design solution proposed by the authors of the Russian Federation patent No. 2223891, involves the use of additional and complicated devices in the aircraft to create special atmospheric phenomena above the wing of the plane such as binary cyclone, which, according to the authors of the patent, help to carry out helicopter takeoff and landing. The proposed solution seems to be very complex structurally and poorly justified economically.

Developing the idea of increase in the aircraft lift force without the use of additional complex structural devices, the author of the present invention also aims to increase the range, carrying capacity and safety of use of aircrafts for various purposes. However, the proposed method of this objective achievement is fundamentally new in relation to the well-known and other proposed designs and provides, both opportunity to reduce the distance of rolling/run of the aircraft during takeoff/landing, and significant reduction in the total wingspan and, as a consequence, decrease in environmental resistance in flight caused by such reduction. All of the above together is designed to increase the air transportation efficiency and improve its safety.

To achieve this objective, it is proposed to use the combined wing attached to the aircraft body, comprising the lifting surface and the turbojet engine, wherein the lifting surface in plan is the combination of the aerodynamic wing and rectangular carrying plate rigidly connected to it. The engine is rigidly attached to the carrying plate so that the stream of hot gases from it flows around the upper surface of the carrying plate, the profile of which is the same as the profile of the engine nozzle. The plate can be made according to conditions of its connection to the aircraft body.

The claimed design is explained in Figures 1, 2, 3, 4 with possible design embodiments of: carrying plate (Figure 1); shape in terms of the engine Laval nozzle section which is an independent element of the wing design (Figure 2); plan view of one of the possible variants of the aircraft (AC) with the combined wings (Figure 3) and side view of such aircraft in Figure 4.

The opportunity to achieve the objective within the claimed wing design, according to the authors, depends on the following. The claimed combined wing consists of three rigidly connected parts: turbojet engine, carrying plate and conventional aerodynamic wing. The lower plane of the combined wing is common for two latter parts, and its area is equal to the sum of their areas. During the engine operation only the upper surface of the carrying plate is blown by the air coming out of the engine, thereby creating the lift force proportional to the thrust force of the engine. Thus the engine shall be above the lower surface of the combined wing. The lift force that occurs in flight on the carrying plate decreases proportionally to the squared flight speed. As the lift force developed by the aerodynamic part of the wing increases proportionally to the squared flight speed, the value of the net lift force of the combined wing, provided that effective areas of the carrying plate and aerodynamic part of the combined wing are equal, becomes independent of the flight speed. Due to the fact that each part of the combined wing works optimally, the combined wing span is much smaller than the span of aerodynamic wings in modem aircrafts, as the result, the environment resistance in flight decreases that gives good fuel economy and improves the economic performances of the air transport. To ensure the stability of the aircraft the lift force vectors of the combined wings and center of gravity of the whole aircraft shall be in the same plane perpendicular to the symmetry axis of the aircraft. And the center of gravity of the whole aircraft shall be below the points of lift force application from the combined wings. The lack of lift force depending on the flight speed, in principle, allows the aircraft using the combined wing to implement the hovering mode at any time and at any point in space, which significantly increases the air transport safety and expands its use. Since the lift force of the combined wing is proportional to the value of thrust developed by the engine, it is necessary to have the ability of full braking of the aircraft in the absence of contact with the ground to implement the hovering mode. The passive and active methods or both methods can be used to stop the aircraft in flight completely. Mechanically driven screens, deflecting the hot gas stream above the carrying plate by $\approx 90°$ can be used as passive braking. (Note that in this case the engines that are part of the combined wings stop working as traction ones). The active braking method is implemented by additional brake engines that allows for effective braking and maneuvering even in the absence of the aircraft contact with the ground surface.

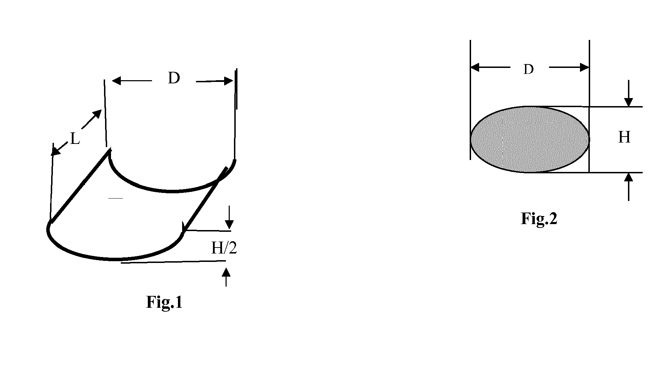

Let us consider the variant of design embodiment of the said carrying plate (Figure 1). In plan it has a rectangular shape with the chord length L, width D and height H/2, and its profile, as shown in the figure in cross direction relative to the chord, has semi-elliptic shape. In one embodiment of the claimed wing, for a better adhesion of the air stream, the Laval nozzle section of the engine shall have, as shown in Figure 2, the elliptical shape with parameters which correspond to the parameters of the cross-section of the carrying plate. The optimal values of the geometric parameters D, H and L, defining the size of the carrying plate in plan and shape of its profile, can be determined experimentally.

When blowing the upper surface of the carrying plate with air stream of density $\rho$ and of speed V it will be under the action of the upward pressure P equal to $0.5\rho V^2$. Accordingly, in flight at speed of $V_0$, when the lower surface of the combined wing is blown with the air stream of density $\rho_0$, the pressure on the plate is reduced by the value of $0.5\rho_0 V_0^2$ and becomes equal to

$$P = 0.5\ (\rho V^2 - \rho_0 V_0^2). \qquad\qquad (1)$$

Consequently the lift force value formed by one carrying plate Fc in flight will be

$$Fc = PS_C = 0.5\ (\rho V^2 - \rho_0 V_0^2)\ S_C, \qquad\qquad (2)$$

where $S_C$ is the area of the carrying plate projection on the horizontal surface. For conventional aerodynamic wing of area $S_a$, moving at a speed of $V_0$ in the atmosphere with density of $\rho_0$, the value of the lift force $F_a$, is

$$F_a = 0.5\ K_a\ \rho_0 V_0^2\ S_a, \qquad\qquad (3)$$

where $K_a$ is the coefficient that depends on the shape of the wing profile only. The value of the coefficient $K_a$ is well known for the wings of various profile shape, and such various mechanically controlled design elements as flaps and slats are used to optimize the profile. However, for the combined wing in which the conventional aerodynamic wing is effectively used in cruising mode only, there is no problem of the profile shape optimization, which simplifies and facilitates the combined wing design. For the combined wing of the claimed design the resulting value of the lift force $F_0$ according to the formulas (2) and (3) will be as follows

$$F_0 = Fc + F_a = 0.5\ (\rho V^2 - \rho_0 V_0^2)\ S_C + 0.5\ K_a\ \rho_0 V_0^2\ S_a \qquad\qquad (4)$$

(4) shows that if

$$S_C = K_a S_a \qquad\qquad (5)$$

the lift force value of the combined wing is determined only by the parameters of the jet stream from the engine of area of $S_C$

$$F_0 = 0.5\ \rho V^2\ S_C \qquad\qquad (6)$$

As the condition (5) does not depend on the movement speed in the atmosphere, flight altitude or engine power, it is universal, and the combined wing design, made under the condition (5) becomes optimal one, i.e. the most advantageous for the use. This fact is indicative of the emergence of the new aircraft with unique aerodynamic characteristics - combined wing. It should be noted that it is easy to fulfil the condition (5), since it is just required to equalize the sizes of the effective areas of the relevant parts of the combined wing.

Taking into account the expression for the thrust force developed by the turbojet engine $F_d$

$$F_d = 0.5 \, \rho V^2 \, S_d, \qquad\qquad (7)$$

where the value $S_d$ is the area of the output window of the engine Laval nozzle, the expression (6) can be transformed into

$$F_\kappa = S_C S_d^{-1} F_d = K_y \, F_d \qquad\qquad (8)$$

The coefficient $K_y = S_C S_d^{-1}$ as the part of (8) is the analogue of the aerodynamic wing quality coefficient $K_c$, which has the value $K_c \approx 14\text{-}15$ for the wings applied in the commercial aviation. When comparing these coefficients it should be borne in mind that $K_y$ is the integrated quality coefficient of the whole aircraft that is why it should be compared to the integrated quality coefficient of the whole aircraft - $\langle K_c \rangle$, the value of which taking into account the body and other auxiliary elements is reduced from $K_c$ to $K_y$ For example the coefficient $\langle K_c \rangle$ for Boing 737-200 with full weight of 48t and thrust force of both engines of 6.6• 2 = 13.2t, is = 48/13.2 ≈ 3.64. The quality coefficient of the combined wing for the above geometry of the carrying plate is $\langle K_c \rangle$ Assuming that L = 4m and H = 0.4 m, $K_y$ is ≈12.7. In comparison with the Boing for which $\langle K_c \rangle = 3.64,$ there is the increase in integrated quality coefficient by 3.5 times, which means approximately the same decrease in specific fuel consumption in flight.

Due to the fact that each part of the combined wing works optimally, their total span is much smaller than the span of aerodynamic wings in modem aircrafts, as the result the environment resistance in flight decreases that gives good fuel economy and improves the economic performance of the air transport.

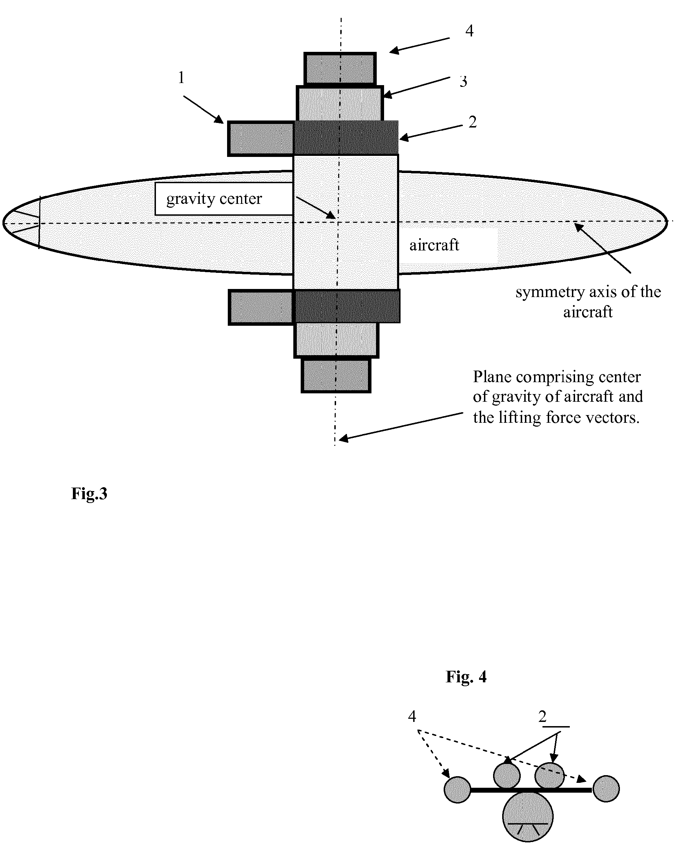

As noted above, to ensure the stability of the aircraft using the wing of claimed design, the lifting force vectors of all combined wings together with the center of gravity of the whole aircraft shall be, as shown in Figure 3, in the same plane perpendicular to the symmetry axis of the aircraft; the following positions in the Figure 3 and 4 designate: 1 - turbojet engine which is the integral part of the combined wing (also serves as the traction engine in flight), 2 - carrying plate, 3 - aerodynamic plate 4 - braking engine. Center of gravity of the whole aircraft shall be below the points of the lifting force application from the combined wings, as shown in Figure 4.

The wing of the aircraft comprising the lifting surface and turbojet engine, wherein the lifting surface is the combination of conventional aerodynamic wing and carrying plate rigidly connected to it; the engine is rigidly attached to the carrying plate so that the stream of hot gases from it flows around its upper surface; the carrying plate profile is the same as the profile of the Laval nozzle of the turbojet engine.

**Claims**

1. The wing of the aircraft comprising the lifting surface and turbojet engine, wherein the lifting surface is the combination of conventional aerodynamic wing and carrying plate rigidly connected to it; the engine is rigidly attached to the carrying plate so that the stream of hot gases from it flows around its upper surface; the carrying plate profile is the same as the profile of the Laval nozzle of the turbojet engine; **characterized in that** effective areas of the carrying plate and aerodynamic part of the combined wing are equal

2. Aircraft comprising aircraft body and wings according to claim 1 **characterized in that** the lift force vectors of the combined wings and center of gravity of the whole aircraft are in the same plane perpendicular to the symmetry axis of the aircraft wherein the center of gravity of the whole aircraft are below the points of lift force application.

**Statement under Art. 19.1 PCT**

The independent claim 1 have been redrafted in two parts, with a first part reflecting the limiting part of claim, and a charaterizing part which claims the new and inventive matter on invention.

Claim 1 has been amended by characteristic feature - ***characterized in that*** *effective areas of the carrying plate and aerodynamic part of the combined wing are equal* which is supported by page 2 lines 22-23 of discription as filed.

The new independedn claim has been drafted, reciting aircraft compising the wings according to claim 1 wherein as additional characterizing feature the following is mentioned - *the lift force vectors of the combined wings and center of gravity of the whole aircraft are in the same plane perpendicular to the symmetry axis of the aircraft wherein the center of gravity of the whole aircraft are below the points of lift force application.* The support of cited features can be found in discription as filed on page 2 lines 12-18 and on page 3 lines 3-6.

D

L

H/2

**Fig.1**

D

H

**Fig.2**

4

1

3

2

gravity center

aircraft

symmetry axis of the
aircraft

Plane comprising center
of gravity of aircraft and
the lifting force vectors.

**Fig.3**

**Fig. 4**

4

2

## INTERNATIONAL SEARCH REPORT

| International application No |
|---|
| PCT/RU2013/001127 |

**A. CLASSIFICATION OF SUBJECT MATTER**
INV. B64C39/06     B64C3/32      B64C29/00      B64D27/02
ADD.

According to International Patent Classification (IPC) or to both national classification and IPC

**B. FIELDS SEARCHED**

Minimum documentation searched (classification system followed by classification symbols)
B64C   B64D

Documentation searched other than minimum documentation to the extent that such documents are included in the fields searched

Electronic data base consulted during the international search (name of data base and, where practicable, search terms used)

EPO-Internal, PAJ, WPI Data

**C. DOCUMENTS CONSIDERED TO BE RELEVANT**

| Category* | Citation of document, with indication, where appropriate, of the relevant passages | Relevant to claim No. |
|---|---|---|
| X | EP 0 078 245 A1 (AERITALIA SPA [IT]) 4 May 1983 (1983-05-04) page 6, line 1 - page 7, line 21 page 8, lines 10-25; figures 1-4 ----- | 1 |
| X | US 3 704 842 A (CUSTER WILLARD R) 5 December 1972 (1972-12-05) column 2, line 63 - column 4, line 9; figures 4,5 ----- | 1 |
| X | US 3 971 534 A (GROTZ CHARLES A) 27 July 1976 (1976-07-27) column 4, lines 6-34 column 5, lines 34-66; figures 1,2,4-6 ----- | 1 |
| X | GB 1 487 077 A (SECR DEFENCE) 28 September 1977 (1977-09-28) page 1, line 29 - page 2, line 3; figure 1 ----- | 1 |

-/--

| X | Further documents are listed in the continuation of Box C. | X | See patent family annex. |
|---|---|---|---|

\* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 3 September 2014 | 15/09/2014 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Busto, Mario |
|---|---|

Form PCT/ISA/210 (second sheet) (April 2005)

## INTERNATIONAL SEARCH REPORT

| International application No |
| --- |
| PCT/RU2013/001127 |

C(Continuation).    DOCUMENTS CONSIDERED TO BE RELEVANT

| Category* | Citation of document, with indication, where appropriate, of the relevant passages | Relevant to claim No. |
| --- | --- | --- |
| X | US 3 884 432 A (BLANCHARD JR WILLARD S ET AL) 20 May 1975 (1975-05-20) column 2, line 43 - column 4, line 48; figures 1-4 ----- | 1 |

Form PCT/ISA/210 (continuation of second sheet) (April 2005)

9

## INTERNATIONAL SEARCH REPORT
Information on patent family members

| International application No |
| --- |
| PCT/RU2013/001127 |

| Patent document cited in search report | | Publication date | Patent family member(s) | | Publication date |
| --- | --- | --- | --- | --- | --- |
| EP 0078245 | A1 | 04-05-1983 | DE<br>DE<br>EP<br>US | 78245 T1<br>3274535 D1<br>0078245 A1<br>4478378 A | 29-09-1983<br>15-01-1987<br>04-05-1983<br>23-10-1984 |
| US 3704842 | A | 05-12-1972 | NONE | | |
| US 3971534 | A | 27-07-1976 | NONE | | |
| GB 1487077 | A | 28-09-1977 | NONE | | |
| US 3884432 | A | 20-05-1975 | NONE | | |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2223891